# EUROPÄISCHE PATENTANMELDUNG

(11) **EP 1 143 323 A1**
(43) Veröffentlichungstag der Anmeldung: **10.10.2001**
(21) Anmeldenummer: 01107677.5
(22) Anmeldetag: 28.03.2001
(51) Int. Cl.: G06F 1/00

(54) **Informations- und Kommunikationssystem**

(30) Priorität: 05.04.2000 DE 10017033
(71) Anmelder: ci4.net Aktiengesellschaft, 74076 Heilbronn (DE)
(72) Erfinder: Kirner, Markus A., 74074 Heilbronn (DE)
(74) Vertreter: Matschkur, Lindner Blaumeier Patent- und Rechtsanwälte

(57) **Zusammenfassung**

Internetbasiertes Informations- und Kommunikationssystem mit mindestens einem als zentraler Server dienenden Rechner, umfassend von wenigstens einem Emittenten an bestimmte Benutzer ausgebbare Informationsträger, wobei jeder Informationsträger einen trägerspezifischen Zugangscode aufweist, durch dessen Eingabe an einem externen Rechner auf einer von dem zentralen Server bereitgestellten zentralen Zugangsseite durch den Benutzer eine dem Zugangscode zugeordnete codespezifische, benutzerseitig zusammenstellbare Informationsseite (21) aufrufbar ist, die durch die Eingabe eines anderen Zugangscodes um diesem zugeordnete Hyperlinks (24) erweiterbar ist.

## Beschreibung

Die Erfindung betrifft ein internetbasiertes Informations- und Kommunikationssystem mit mindestens einem als zentraler Server dienenden Rechner.

Viele Firmen benutzen das Internet, um auf diese Weise über ihre Produkte und Dienstleistungen zu informieren. Von den Verbrauchern werden die Informationsmöglichkeiten des Internets vor einer Kaufentscheidung durch das gezielte Anwählen von Homepages verschiedener Firmen sowie das Herunterladen von Informationen genutzt.

In der Praxis tritt jedoch häufig der Fall auf, dass die genaue Domain-Adresse eines Unternehmens nicht bekannt ist. Angesichts der explosionsartig ansteigenden Anzahl von Domain-Namen im Internet ist es auch nicht möglich, dass jede Firma ihren Firmennamen als Internet-Domain nutzen kann. Nach einer unbekannten Domain kann zwar über Suchmaschinen gesucht werden, doch ist diese Methode unsicher und eventuell langwierig, falls die betreffende Firma nicht in der Datenbank der Suchmaschine eingetragen ist. Dieser Umstand ist für den Verbraucher besonders unerfreulich, da das Heraussuchen der für ihn interessanten Angebote umständlich und mühsam ist. Auf der anderen Seite muss eine im Internet werbende Firma befürchten, dass ihre Homepage nicht gefunden wird und die Verbraucher bei einem Wettbewerber kaufen.

Der Erfindung liegt daher das Problem zugrunde, dass Auffinden von Informationen im Internet zu erleichtern.

Zur Lösung dieses Problems ist bei einem Informations- und Kommunikationssystem der eingangs genannten Art erfindungsgemäß vorgesehen, dass es von wenigstens einem Emittenten an bestimmte Personen ausgebbare Informationsträger umfasst, wobei jeder Informationsträger einen trägerspezifischen Zugangscode aufweist, durch dessen Eingabe an einem externen Rechner auf einer von dem zentralen Server bereitgestellten zentralen Zugangsseite durch den Benutzer eine dem Zugangscode zugeordnete codespezifische, benutzerseitig zusammenstellbare Informationsseite aufrufbar ist, die durch die Eingabe eines anderen Zugangscodes um diesem zugeordnete Hyperlinks erweiterbar ist.

Der Informationsträger stellt die Verbindung zwischen den angesprochenen Interessenten oder Verbrauchern und den Informationen eines Unternehmens dar, das die Informationsträger an ausgewählte Personen verteilt. Zu diesem Zweck enthält er alle zum Auffinden der Informationen im Internet erforderlichen Hinweise. Durch die Verwendung eines trägerspezifischen Zugangscodes ist sichergestellt, dass nur autorisierte Personen Zugang zu den Informationen erhalten können. Die Informationen können personalisiert zur Verfügung gestellt werden, indem sie auf persönliche Interessen abgestimmt sind. Grundsätzlich werden die Karten jedoch unpersonalisiert, d.h. anonym verteilt. Nur wenn der Kartennutzer es wünscht, kann er dem Kartenemittenten seine persönlichen Daten übermitteln. Der Zugang zu der Informationsseite kann von einem beliebigen mit dem Internet verbundenen Kommunikationsgerät aus erfolgen, beispielsweise über einen PC. Die Person wählt eine bestimmte, zentrale Zugangsseite an und gelangt auf die Internetseite des Betreibers des Informations- und Kommunikationssystems. Von dort aus sind weitere Informationen abfragbar.

Bei einem erfindungsgemäßen Informations- und Kommunikationssystem ist der Informationsträger als bevorzugt scheckkartenförmige Karte ausgebildet, auf der die Internetadresse der zentralen Zugangsseite und der Zugangscode aufgedruckt sind. Bevorzugt werden dabei Plastikkarten, die in der Art einer Scheckkarte ausgebildet sind. Auch eine Karte aus Karton oder dergleichen ist denkbar. Derartige Plastikkarten sind ein vom Markt akzeptierter Daten- und Werbeträger und erzeugen eine besonders hohe Bindungswirkung an ein bestimmtes Produkt oder Unternehmen. Die Scheckkarte kann vom Verbraucher bequem zusammen mit seinen übrigen Karten aufbewahrt werden, so dass er die gesuchte Internetadresse im Bedarfsfall problemlos auffindet. Alle dazu erforderlichen Informationen befinden sich auf der Karte. Die Internetadresse einer zentralen Zugangsseite dient als Einstiegseite, auf der der trägerspezifische Zugangscode eingegeben werden muss. Das erfindungsgemäße Informations- und Kommunikationssystem ist derart aufgebaut, dass die Plastikkarten von unterschiedlichen Firmen ausgegeben werden können. Beispielsweise kann eine Person eine Karte von einem Versandhaus und eine weitere Karte von einem Sportartikelhersteller erhalten. Bei beiden Karten läuft der Vorgang des Einloggens identisch ab, indem der Zugangscode auf der zentralen Zugangsseite eingegeben wird. Die hinter der Zugangsseite angebotenen Informationen können firmenspezifisch ausgewählt sein, d.h. das Versandhaus und der Sportartikelhersteller stellen unterschiedliche Angebote zur Verfügung.

Aus Sicherheitsgründen ist vorgesehen, dass der Zugangscode eine Kartennummer und einen Kartencode umfasst. Die Kartennummer dient zur eindeutigen Identifizierung des Benutzers, indem jede Kartennummer nur einmal vergeben ist. Der Kartencode hat die Funktion einer Geheimzahl, um eine missbräuchliche Verwendung zu verhindern. Bei dem erfindungsgemäßen Informations- und Kommunikationssystem weist der Server ein Mittel zum Vergleichen des eingegebenen Zugangscodes mit einem in einer Datenbank des Servers gespeicherten Zugangscode auf und ermöglicht bei Identität den Zugang. Der individuelle Zugangscode wird bei der Kartenherstellung durch einen Zufallsgenerator erzeugt und ermöglicht nur autorisierten Benutzern den Zugang.

Besonders sicher sind erfindungsgemäße Informations- und Kommunikationssysteme, bei denen der Kartencode aus einer Zahlen- und/oder Buchstabenkombination besteht. Dadurch stehen genügend Kombinationsmöglichkeiten zur Verfügung, die die Sicherheit des Systems garantieren.

Es hat sich als besonders günstig herausgestellt, dass die Kartennummer wenigstens sechsstellig, vorzugsweise achtstellig, und der Kartencode wenigstens vierstellig, vorzugsweise fünfstellig ist. Es werden fortlaufende Kartennummern verwendet, wobei jede Nummer nur einmal vergeben wird. Die Kartennummer kann auch eine beliebige Kombination der Ziffern 0 bis 9 und/oder der Buchstaben A bis Z sein. Nach der Eingabe der Kartennummer und des Kartencodes erfolgt die Überprüfung der eingegebenen Daten mit den in einer Datenbank des Servers gespeicherten Daten. Bei Übereinstimmung wird der Zugang zu einer individuellen Kartenseite gewährt. Der Inhalt dieser codespezifischen Informationsseite wird von dem jeweiligen kartenemittierenden Unternehmen bestimmt. Denkbar ist auch, dass ein Unternehmen mehrere verschiedene Produktbereiche hat und dementsprechend unterschiedliche Karten ausgibt, die an die angesprochenen Verbraucher verteilt werden. Die Karten können entweder in großer Streuung, z.B. über Werbeanzeigen in Zeitschriften verteilt oder persönlich übergeben werden. Die persönliche Übergabe erlaubt es dem Kartenemittenten andererseits, seine Karten gezielt zu übergeben, so dass ihm bekannt ist, welcher Kunde welche Karte erhalten hat. Damit ist es möglich, einzelne Mitarbeiter als persönliche und kompetente Online-Berater einzusetzen. Beispielsweise werden die Karten in den einzelnen Abteilungen eines Kaufhauses verteilt. Somit erhält der Kunde seine Karte von einem Kundenberater aus einer bestimmten Verkaufsabteilung und findet diesen Kundenberater auch online als persönlichen Berater vor.

In einer Weiterbildung der Erfindung ist bei einem erfindungsgemäßen Informations- und Kommunikationssystem vorgesehen, dass die codespezifische Informationsseite einen oder mehrere Hyperlinks aufweist, die mit Internetseiten des Kartenemittenten verknüpft sind. Nach dem Aufrufen eines Hyperlinks gelangt der Benutzer entweder auf die allgemeine Homepage des Kartenemittenten oder auf eine speziell für das Informations- und Kommunikationssystem gestaltete Internetseite des Kartenemittenten. Alternativ können die Hyperlinks auch mit Informationsseiten anderer Anbieter, z.B. mit denen von Produktherstellern, verknüpft sein, auf denen der Benutzer die gewünschten Informationen findet. Durch die Verwendung von Hyperlinks entfällt das umständliche manuelle Eingeben der Internetadressen. Das Auffinden der Informationen ist für den Benutzer sehr einfach und bequem. Das kartenemittierende Unternehmen erzielt mit geringem Aufwand die gewünschte Werbewirkung und kann potenzielle Kunden zielgruppenorientiert ansprechen.

Für den Benutzer ist es besonders vorteilhaft, dass die codespezifische Informationsseite durch die Eingabe eines Zugangscodes eines anderen Kartenemittenten um diesem zugeordnete Hyperlinks erweiterbar ist. Erhält der Benutzer eine Karte von einem ersten kartenemittierenden Unternehmen, so hat er Zugang zu dessen Informationsangebot. Falls er zu einem späteren Zeitpunkt eine weitere Karte eines anderen Unternehmens erhält, kann er die Informationsangebote beider Anbieter nutzen, indem er die neue Karte mit der alten kombiniert. Der Benutzer loggt sich zunächst mit dem Zugangscode der ersten Plastikkarte ein, anschließend kann er seine aktive Karte mit einer weiteren Karte seiner Wahl kombinieren, indem er die Kartennummer und den Kartencode der zweiten Karte eingibt. Der nächste Zugang kann entweder mit dem Zugangscode der ersten oder der zweiten Karte erfolgen, die daraufhin erscheinende Informationsseite ist in beiden Fällen dieselbe. Die codespezifische Informationsseite ist jetzt um die Informationen des zweiten Kartenemittenten erweitert. Auf diese Weise kann der Benutzer den Umfang und das Erscheinungsbild seiner codespezifischen, persönlichen Informationsseite nach seinen Interessensgebieten auf der Grundlage der erhaltenen Karten frei gestalten. Wenn mehrere Karten kombiniert sind, wird das Informations- und Kommunikationssystem zur zentralen Einkaufs- und Informationsplattform für den Anwender, da er die von ihm gesuchten Informationen trotz der unüberschaubaren Datenflut des Internets zuverlässig findet. Die Karte wirkt dabei als "Informationsfilter" und trifft eine Vorausauswahl aus dem Gesamtangebot, wobei lediglich vom Benutzer gewünschte, auf seinen persönlichen Informationsbedarf abgestimmte Informationen weitergegeben werden.

Besonders benutzerfreundlich ist ein erfindungsgemäßes Informations- und Kommunikationssystem, das ein Mittel zum Senden und Empfangen elektronischer Mitteilungen über die Informationsseite aufweist. Der Email-Austausch findet in erster Linie zwischen Kartenemittenten und dem Kartennutzer statt, wobei der Austausch der Emails online erfolgt. Die Emails werden zwischen der benutzerspezifischen Informationsseite des Kartennutzers und dem dazugehörigen Online-Postfach des Kartenemittenten ausgetauscht. Denkbar ist auch, dass der Kartenemittent die Beantwortung von Anfragen nicht selbst durchführt, sondern diese Leistungen von beauftragten Personen oder Dienstleistungsunternehmen erbringen lässt, die in der Art eines Call-Centers arbeiten. Der Kartenbenutzer kann über seinen Rechner gezielt Fragen zu bestimmten Produkten stellen, die von einem Mitarbeiter des Kartenemittenten persönlich beantwortet werden, so dass dem Verbraucher eine weitere Kontaktmöglichkeit zur Verfügung gestellt wird. Ein Kartenbenutzer kann sich per Email auch an den Betreiber des Informations- und Kommunikationssystems wenden und von diesem ebenfalls Service- oder Hilfeleistungen anfordern. Neben der Verwendung von Emails als systeminternes Kommunikationsmittel können diese auch zum Versenden und Empfangen externer Mitteilungen benutzt werden, wodurch sich zusätzliche Werbemöglichkeiten ergeben. Der Betreiber des Informations- und Kommunikationssystems kann beispielsweise an die Emails der Benutzer eigene Werbetexte anhängen, um weitere Kunden zu gewinnen und um das System bekannt zu machen. Speicherintensive Informationen werden jedoch nicht als Email-Anhang versandt, sondern durch in den Text der Email integrierte Hyperlinks übermittelt.

Der Kartenemittent verfügt über eine spezielle Karte, die es ihm ermöglicht, über den allgemeinen Zugang auf sein eigenes Informationsangebot zuzugreifen. Er kann Emails lesen und versenden sowie das Erscheinungsbild, die Inhalte und die dazugehörigen Links seiner Informationsseiten verändern.

Es ist auch denkbar, dass der Betreiber des Informations- und Kommunikationssystems als Internetprovider fungiert, wobei die Kosten sowohl von den Benutzern als auch von den werbenden, kartenemittierenden Unternehmen aufgebracht werden können. Die Abrechnung mit den Kunden kann dabei entweder nach der verbrauchten Zeit oder über eine Pauschalgebühr, eine sogenannte "flat rate" erfolgen. Diese Möglichkeit ist für ein kartenemittierendes Unternehmen besonders attraktiv, da auf diese Weise sämtliche Internetaktivitäten eines Benutzers über die Karte mit den werbenden Unternehmen in Verbindung gebracht werden.

Bevorzugt wird ein Informations- und Kommunikationssystem, bei dem eine elektronische Mitteilung Hyperlinks enthält, durch deren Anwahl kontextspezifische Informations- und/oder Hilfeseiten aufrufbar sind. Häufig tritt der Fall auf, dass viele Verbraucher die gleichen Fragen stellen, beispielsweise nach der Lieferbarkeit, dem Preis oder dem Erscheinungstermin eines neuen Produkts. Oder es ergeben sich nach einem Kauf Fragen zur Anwendung und Handhabung oder bezüglich der Garantie. Die Bearbeitung dieser Anfragen lässt sich standardisieren, indem die als Email verschickten Antwortmitteilungen Hyperlinks enthalten, die die gestellten Fragen beantworten. Die mit einem hohen Zeitaufwand verbundene individuelle Beantwortung von Anfragen kann entfallen oder zumindest sehr vereinfacht werden, was in der Folge sowohl zu einer verkürzten Bearbeitungszeit als auch zu Kosteneinsparungen führt. Die Hyperlinks führen zu bestimmten Internetseiten des Kartenemittenten, auf denen der Benutzer die gesuchten Informationen findet. Die Internetseiten können baumartig miteinander verknüpft sein, wobei auf jeder Seite eine Auswahl zwischen mehreren Alternativen angeboten wird, so dass der Benutzer die gesuchten Informationen schrittweise auffinden kann.

Es kann auch vorgesehen sein, dass die Plastikkarte ggf. zusätzlich einen Speicher, vorzugsweise einen Magnetstreifen oder einen Chip aufweist, in dem Kartennummer und/oder Kartencode und/oder benutzerspezifische Daten gespeichert sind. Beim Einsetzen der Karte in einen Kartenleser einer mit dem Internet verbundenen Kommunikationseinrichtung wird der Zugangscode automatisch übermittelt und es wird die dem Zugangscode zugeordnete Informationsseite aufgerufen. Die Verwendung der Karte wird damit erheblich vereinfacht, da das manuelle Eingeben des Zugangscodes entfällt. Die Karte kann vom Benutzer auch unterwegs überall dort eingesetzt werden, wo ein entsprechender Kartenleser zur Verfügung steht.

Gemäß einer zweiten Lösung des der Erfindung zugrunde liegenden Problems ist bei einem Informations- und Kommunikationssystem der eingangs genannten Art erfindungsgemäß vorgesehen, dass es von wenigstens einem Emittenten ausgebbare Codes umfasst, die von einem Benutzer über eine Kommunikationsverbindung an den zentralen Server übermittelbar sind, wobei nach der Übermittlung eine codespezifische, benutzerseitig zusammenstellbare Informationsseite im Internet abrufbar ist, die über einen Hyperlink mit dem Code zugeordneten Informationen verknüpft ist und durch die Eingabe eines anderen Codes um einen diesem zugeordneten Hyperlink erweiterbar ist.

Die Funktion eines Codes gemäß dieser zweiten Lösung unterscheidet sich von derjenigen eines Zugangscodes gemäß der ersten Lösung. Jeder Zugangscode ist einmalig und wird nur auf einem einzigen Informationsträger aufgedruckt. Er kann daher einem bestimmten Benutzer zugeordnet werden und als Identifizierungsmerkmal dienen. Nur der Besitzer des Informationsträgers bzw. der Karte kennt den aus der Kartennummer und einem Kartencode bestehenden Zugangscode. Dem Systembetreiber sind zwar nicht notwendigerweise die persönlichen Daten dieses Benutzers bekannt, er kann jedoch anhand der kombinierten Zugangscodes auf dessen Präferenzen, das heißt auf die von ihm bevorzugten Firmen oder seine Interessensgebiete schließen. Der Zugangscode kann einerseits zur Durchführung der Berechtigungsprüfung dienen, andererseits ermöglicht er das Abrufen der von dem Emittenten zur Verfügung gestellten Informationen.

Im Gegensatz dazu wird ein Code gemäß der zweiten Lösung nicht nur einmalig vergeben, sondern breit gestreut, so dass derselbe Code von einer großen Benutzerzahl verwendet werden kann.

Jeder Code ist mit bestimmten, vom Emittenten festgelegten, Informationen verknüpft, die nach der Eingabe des Codes durch den Benutzer abgerufen werden können. In der einfachsten Form kann es sich bei den Informationen um die Adresse der Homepage des Emittenten handeln. Nach der Eingabe des Codes und dem Abrufen der Informationen gelangt ein Benutzer auf die Homepage des Emittenten und kann sich dort über Produkte und Dienstleistungen informieren. Es kann auch vorgesehen sein, dass ein Code direkt mit bestimmten Informationen eines Produkts oder einer Dienstleistung verknüpft ist, so dass von dem Benutzer spezielle angebotsbezogene Informationen abgerufen werden können. Ein Emittent kann viele verschiedene Codes ausgeben, die sich auf unterschiedliche Angebote beziehen. Auf der codespezifischen Informationsseite kann der Benutzer die Informationen von mehreren Codes kombinieren, beispielsweise kann er verschiedene Angebote desselben Anbieters speichern, er kann jedoch auch durch die Eingabe der entsprechenden Codes Produkte von Wettbewerbern einander gegenüberstellen und direkt vergleichen.

Der Code wird durch den Emittenten möglichst vielen potenziellen Interessenten bekannt gemacht, so dass er nicht zur Identifizierung eines bestimmten Benutzers des Informations- und Kommunikationssystem dienen kann.

Eine besonders benutzerfreundliche Eingabeweise wird erzielt, wenn die Kommunikationsverbindung als Mobilfunkverbindung und/oder Internetverbindung ausgebildet ist. Eine Mobilfunkverbindung weist den Vorteil auf, dass ein Benutzer einen Code praktisch jederzeit an den Rechner übermitteln kann. Die Eingabe kann also mobil und unabhängig von stationären Eingabegeräten erfolgen. Auf diese Weise können mehrere Codes nacheinander eingegeben werden, wobei die zugehörigen Informationen zu einem späteren Zeitpunkt über das Internet abgerufen werden können. Als Alternative zu der Übermittlung des Codes über eine Mobilfunkverbindung kann der Benutzer neue Codes auch über das Internet an den zentralen Server übermitteln.

Bevorzugt werden Kommunikationsverbindungen, bei denen eine den Benutzer identifizierende Kennung automatisch an den Rechner übertragen wird. Sollte eine automatische Übertragung nicht möglich sein, kann die Kennung vom Benutzer manuell eingegeben werden.

Es ist zweckmäßig, dass die den Benutzer identifizierende Kennung als Rufnummer ausgebildet ist. Dabei handelt es sich bevorzugt um die Rufnummer eines Mobiltelefons, die beim Verbindungsaufbau automatisch übertragen wird. Es kann sich jedoch auch um die Rufnummer eines Festnetzanschlusses handeln, sofern diese automatisch an den Rechner übermittelt werden kann. Die automatisch übertragene Kennung kann als Zugangskennwort dienen, da sie vom Benutzer nicht beeinflusst werden kann. Insbesondere Mobiltelefone werden üblicherweise nur von einer einzigen Person benutzt, die durch die übertragene Rufnummer identifiziert werden kann. Erfolgt die Kommunikationsverbindung über das Internet, kann als Kennung alternativ auch ein Zugangskennwort oder eine Geheimzahl verwendet werden. Der Benutzer erhält diese Kennung nach der Anmeldung per Email.

Erfolgt der Erstkontakt über das Mobiltelefon, so wird seine Handynummer automatisch erkannt und er kann die Eingabe des ersten Codes vornehmen. Das Zugangskennwort für den Internetzugang wird ihm als SMS-Nachricht übermittelt.

Weitere Codes können von dem Benutzer sowohl über das Internet als auch über das Handy eingegeben werden.

Bei einer über ein Mobiltelefon hergestellten Kommunikationsverbindung wird der Code zweckmäßig manuell durch eine Tasteneingabe oder akustisch von dem Benutzer eingegeben und an den Rechner übermittelt. Eine besonders bequeme und zuverlässige Codeeingabe kann über einen Barcodeleser eines Mobiltelefons erfolgen. Dieser Barcode kann von dem Systembetreiber alternativ oder zusätzlich zu einem gedruckten Code verbreitet werden. Der Benutzer kann den Code mit dem Barcodeleser des Mobiltelefons erfassen und anschließend automatisch übermitteln.

Damit der Benutzer sicher sein kann, dass der neu eingegebene Code vom System richtig erfasst wurde, kann unmittelbar nach der Eingabe des Codes eine Sprachmitteilung an den Benutzer übermittelt werden. Ebenso kann es vorgesehen sein, dass er eine Benachrichtigung in Form einer SMS erhält.

Im Sinne einer möglichst weiten Verbreitung eines Codes ist dieser zweckmäßig Bestandteil eines Werbeträgers. Dabei sind grundsätzlich sämtliche Werbeträger denkbar, sie können sowohl als Plastikkarte oder Aufkleber oder als Aufdruck auf der Ware oder der Produktverpackung gestaltet sein, gleichermaßen kann der Werbeträger ein Internetbanner, eine Werbe-Email oder eine Werbe-SMS sein. Bei Internetbannern kann vorgesehen sein, dass diese angeklickt werden und dadurch automatisch auf die persönliche Informationsseite des Benutzers übernommen werden. Die Internetseiten unterschiedlicher Anbieter können ein als Hyperlink oder Banner gestaltetes Logo des Systemanbieters aufweisen, das von den Benutzern bei Interesse angeklickt wird. Nach der Übermittlung des Codes sieht der Benutzer auf seiner persönlichen Informationsseite, um welchen Anbieter es sich handelt. Gegebenenfalls kann auch direkt auf ein spezielles, mit dem Code verknüpftes Produkt hingewiesen werden, so dass ein direkter Kontakt zwischen dem Benutzer und dem Anbieter über das System hergestellt wird. In einer Weiterbildung des Systems kann vorgesehen sein, dass der Benutzer das Produkt über das Internet bestellen kann. Die Abwicklung der Bestellung und des Versands und die Bezahlung kann auch vom Betreiber des Informations- und Kommunikationssystems vorgenommen werden, der dann als Vermittler zwischen Anbietern und Nutzern auftritt. Denkbar ist auch, dass die Bezahlung über ein Mobilfunk-Bezahlsystem erfolgt.

Als Werbeträger kommen ferner Plakate, Fernseh- oder Radiospots sowie Werbeanzeigen in Tageszeitungen, Publikums- und Fachzeitschriften infrage. Auch in Schaufenstern ausgestellte Waren können mit Codes versehen sein. Ebenso eignen sich Flyer oder Beileger. In weiterer Ausgestaltung der Erfindung ist vorgesehen, dass Exponate einer Ausstellung mit Codes versehen sind, so dass Besucher spezielle Informationen abrufen können. Werbeträger in gedruckter Form können auch Barcodes enthalten, die mit einem Barcodeleser eines Mobiltelefons erfasst werden.

Für beide Varianten des erfindungsgemäßen Informations- und Kommunikationssystems gilt, dass die codespezifische Informationsseite Mitteilungen eines Emittenten an den Benutzer enthalten kann. Diese können beispielsweise in der Form von Emails gestaltet sein, d.h., der Benutzer sieht zunächst die Titelzeile oder Überschrift der Mitteilung und kann diese anklicken, um ausführliche Informationen zu erhalten. Auf diese Weise kann ein Emittent regelmäßig diejenigen Benutzer gezielt ansprechen, die sich für seine Produkte interessieren. Auf diese Weise lassen sich Streuverluste minimieren und der Werbeetat kann zielgerichtet eingesetzt werden.

In weiterer Ausgestaltung des erfindungsgemäßen Systems ist vorgesehen, dass die codespezifische Informationsseite Hyperlinks aufweist, die mit Internetseiten des Emittenten verknüpft sind. Durch das Anklicken der Hyperlinks gelangt der Benutzer auf eine Homepage des jeweiligen Emittenten und kann sich dort näher über die angebotenen Waren informieren. Damit kann über das System ein direkter Kontakt zwischen einem Anbieter und dem Nutzer hergestellt werden. Ebenso kann er mit Kundenberatern des Emittenten Kontakt aufnehmen, so dass er über das Internet persönlich beraten werden kann. Dazu ist auf der Informationsseite zweckmäßig ein Mittel zum Senden und Empfangen elektronischer Mitteilungen vorgesehen, das als Email-Funktion realisiert sein kann. Über die Hyperlinks können ebenfalls kontextspezifische Informations- oder Hilfeseiten aufrufbar sein, um dem Informationsbedürfnis der Kunden Rechnung zu tragen. Auf diesen Internetseiten können Antworten auf häufig gestellte Fragen abgelegt sein, um die vergleichsweise kostenintensive telefonische Hotline zu entlasten.

Besonders wichtig ist bei dem erfindungsgemäßen Informations- und Kommunikationssystem, dass sämtliche Inhalte der Informationsseite benutzerseitig gruppierbar, erweiterbar und wieder löschbar sind. Dementsprechend kann der Benutzer seine Internetumgebung wunschgemäß einrichten, er behält also die Kontrolle über diejenigen Angebote, die ihm präsentiert werden. Des Weiteren erhält ein Emittent bzw. der Betreiber des Informations- und Kommunikationssystems nur diejenigen Daten des Benutzers, die dieser freiwillig offenbart. Wenn ein Benutzer anonym bleiben will, so kann er sämtliche Inhalte ohne Preisgabe der persönlichen Daten benutzen.

Zur Erhöhung der Kundenbindung und als weiterer Anreiz für die Benutzung ist vorgesehen, dass jedem Benutzer ein Punktekonto zugeordnet ist und Punkte in Abhängigkeit von Aktionen des Benutzers vergeben werden. Für die Eingabe eines neuen Codes erhält der Benutzer Punkte, des Weiteren werden Punkte für die Anwahl von Hyperlinks vergeben. Wenn ein Benutzer Mitteilungen eines Emittenten liest oder per Email Kontakt mit einem Anbieter aufnimmt, wird das Punktekonto des Benutzers ebenfalls erhöht. Es kann auch vorgesehen sein, dass ein Benutzer für die Empfehlung des Systems an Bekannte Punkte erhält. Eine hohe Kundenbindung wird erreicht, wenn das angesammelte Punkteguthaben als Geldbetrag auszahlbar ist.

Für einen Anbieter stehen mehrere Kommunikationswege mit dem Benutzer zur Verfügung. Einerseits kann der Emittent Mitteilungen über die Informationsseite an den Benutzer verschicken. Die Mitteilungen werden dabei als Emails verschickt. Falls der Benutzer es wünscht, kann er Mitteilungen ebenso als SMS (Short Message Service) oder per Post erhalten. Ausschlaggebend ist dabei jeweils die vom Kunden gewählte bevorzugte Mitteilungsart. Dem Benutzer stehen dieselben Kommunikationswege zur Verfügung, wenn er mit dem Anbieter Kontakt aufnehmen will.

Das erfindungsgemäße Informations- und Kommunikationssystem ist für die Nutzung der neuesten Kommunikationstechnologie ausgelegt, dementsprechend ist vorgesehen, dass die Kommunikation zwischen dem Benutzer und dem als zentralen Server dienenden Rechner auch unter Nutzung der WAP-, und/oder GPRS- und/oder UMTS-Technologie erfolgt.

Ein weiterer Vorteil ergibt sich bei einem erfindungsgemäßen Informations- und Kommunikationssystem, wenn die Inhalte der dem Zugangscode zugeordneten Informationsseite benutzerseitig gruppierbar, erweiterbar und wieder löschbar sind. Die Inhalte können frei nach Interessensgebieten kombiniert werden, so dass zum Beispiel mehrere Anbieter der gleichen Produktgruppe auf einer Seite zusammengefasst werden können. Es ergibt sich dadurch die Möglichkeit, mehrere Anbieter einer Produktkategorie zu kombinieren. Beispielsweise können drei verschiedene Fahrzeughersteller auf einer Seite gemeinsam dargestellt werden. Erhält der Benutzer anschließend noch die Karte eines vierten Fahrzeugherstellers, so können dessen Angebote auf der Informationsseite hinzugefügt werden. Wenn ein Unternehmen bei der Kaufentscheidung nicht mehr berücksichtigt werden soll, können die Informationen dieses Anbieters auf der gemeinsamen Seite gelöscht werden, so dass sie nicht mehr erscheinen.

Zwei Ausführungsbeispiele der Erfindung werden anhand der beigefügten Figuren erläutert. Die Figuren sind schematische Darstellungen und zeigen:
- Fig. 1: eine Bildschirmdarstellung der zentralen Zugangsseite des erfindungsgemäßen Informations- und Kommunikationssystems;
- Fig. 2: die codespezifische Informationsseite beim erstmaligen Einloggen;
- Fig. 3: eine benutzerseitig zusammengestellte Informationsseite mit Inhalten mehrerer Kartenemittenten gemäß dem ersten Ausführungsbeispiel;
- Fig. 4: eine von einem Kartenemittenten herausgegebene Plastikkarte mit einem aufgedruckten Zugangscode;
- Fig. 5: eine schematische Darstellung der Kommunikation zwischen dem Benutzer und dem Rechner gemäß dem zweiten Ausführungsbeispiel; und
- Fig. 6: eine Bildschirmdarstellung einer benutzerseitig zusammengestellten Informationsseite gemäß dem zweiten Ausführungsbeispiel.

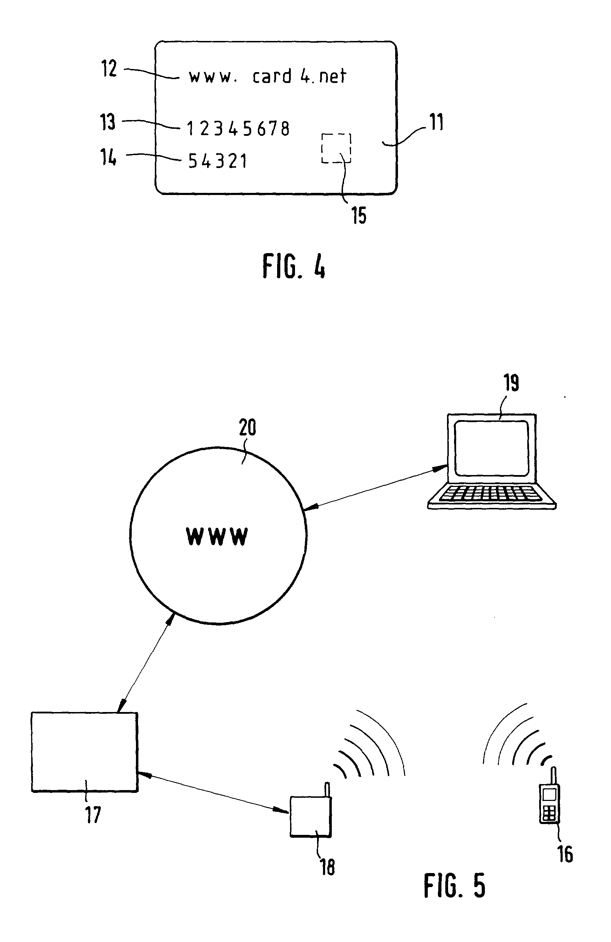

Als Informationsträger des Informations- und Kommunikationssystems dient die in Fig. 4 dargestellte Karte 11, die ähnlich einer Scheckkarte gestaltet ist. Der Benutzer erhält die Karte 11 von einem Unternehmen, das damit auf seine im Internet abrufbaren Angebote aufmerksam machen will. Die Karte 11 kann beispielsweise von einem Versandhaus verteilt worden sein. Wie in Fig. 4 zu erkennen ist, sind auf der Karte 11 verschiedene Informationen aufgedruckt bzw. eingeprägt, die das Auffinden der Internetinformationen ermöglichen. In der ersten Zeile ist die Internetadresse 12 des Betreibers des Informations- und Kommunikationssystems angegeben, die in dem dargestellten Ausführungsbeispiel www.card4.net lautet. Über diese Adresse erreicht man eine zentrale Zugangsseite 2, die bei jeder Kartenbenutzung aufgerufen wird.

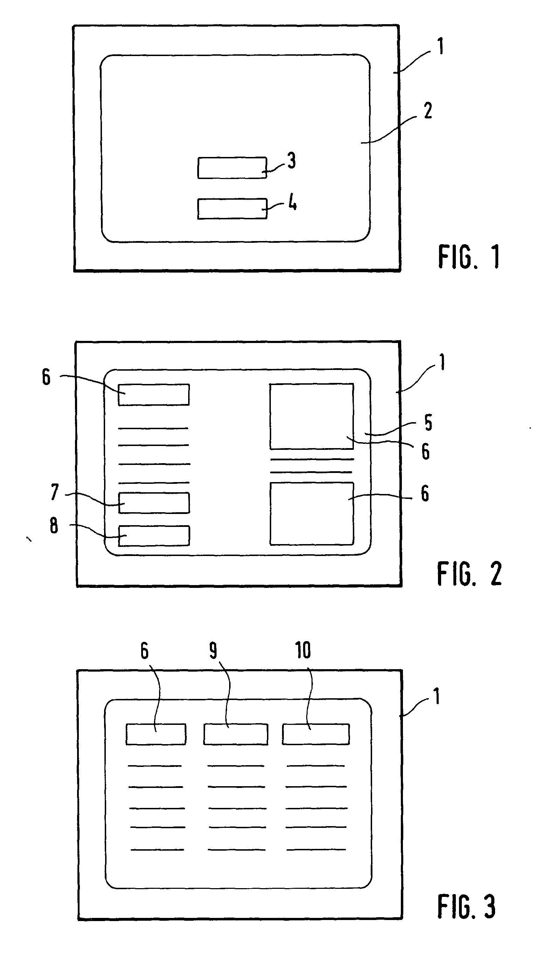

Gibt der Benutzer die Internetadresse 12 in einem Browserprogramm eines mit dem Internet verbundenen PC ein, so erscheint auf einem Bildschirm 1 die in Fig. 1 abgebildete zentrale Zugangsseite 2. Es spielt dabei keine Rolle, ob der Benutzer die Karte 11 zum ersten Mal verwendet oder ob er das Informationsangebot bereits häufig genutzt hat, denn die Bildschirmdarstellung der zentralen Zugangsseite ist jeweils gleich.

Die Zugangsseite 2 enthält zwei Eingabefelder 3, 4, die zur Eingabe des Zugangscodes dienen. Auf der in Fig. 4 gezeigten Karte 11 befinden sich neben der Internetadresse 12 der zentralen Zugangsseite eine Kartennummer 13 sowie ein Kartencode 14. In diesem Fall ist die Kartennummer 13 achtstellig und der Kartencode 14 fünfstellig, wobei jede Kartennummer 13 insgesamt nur einmal vergeben und damit individuell ist. Der Kartencode 14 ist auf der Karte 11 aufgedruckt. Da der Kartencode 14 die Funktion einer Geheimzahl hat, kann er dem Benutzer aus Sicherheitsgründen auch separat mitgeteilt werden, so dass eine missbräuchliche Verwendung durch Dritte verhindert wird. Zusätzlich kann der Kartencode benutzerseitig verändert werden. Die Karte 11 weist ferner einen als Chip 15 ausgebildeten elektronischen Speicher auf, der in einem Lesegerät ausgelesen werden kann.

Um Zugang zu dem Informations- und Kommunikationssystem zu erhalten, wird die Kartennummer 13 in das obere Eingabefeld 3 und der Kartencode 14 in das untere Eingabefeld 14 eingegeben. Die eingegebenen Daten werden über das Internet an einen als zentraler Server dienenden Rechner übermittelt, der ebenfalls Bestandteil des Informations- und Kommunikationssystems ist. Der zentrale Server enthält eine Datenbank mit allen Kartennummern und den zugehörigen Kartencodes sowie weiteren benutzerspezifischen Informationen. Es erfolgt ein Vergleich zwischen den eingegebenen und den in der Datenbank gespeicherten Daten. Bei Identität wird der Zugang freigegeben und auf dem Bildschirm 1 erscheint beim erstmaligen Einloggen die in Fig. 2 dargestellte Informationsseite 5, die bei diesem Ausführungsbeispiel auf die Internetangebote eines Versandhauses hinweist.

Wie der Darstellung in Fig. 2 zu entnehmen ist, enthält die Informationsseite mehrere, verschiedenartige Informationen. Es handelt sich dabei sowohl um Informationen, die von dem Betreiber des Informations- und Kommunikationssystems zur Verfügung gestellt werden, als auch um Informationen des kartenemittierenden Unternehmens, die in Form von Texten, Bildern, Hyperlinks und anderen Multimediakomponenten 6 präsentiert werden. In der rechten Spalte der Bildschirmdarstellung der Informationsseite 5 befinden sich zwei untereinander angeordnete Bilder 6, die auf ein besonderes Angebot hinweisen. Die Bilder sind als Hyperlinks ausgebildet und rufen beim Anwählen weitere Informationsseiten auf, die nähere Informationen zu den betreffenden Produkten liefern. In der linken Spalte findet der Benutzer allgemeine Informationen über das Unternehmen und über Bestellmöglichkeiten. Abrufbar sind z.B. die Liefermöglichkeiten einzelner Produkte, Garantiebedingungen, Umtausch- und Rückgabemodalitäten. Einen hohen Informationsgehalt weisen Informationen in Form von benutzerseitig drehbaren dreidimensionalen Ansichten auf, die es ermöglichen, ein Produkt von mehreren Seiten zu betrachten. Falls der Benutzer bereits eine Bestellung über das Internet aufgegeben hat, lässt sich der aktuelle Bestellstatus jederzeit abfragen. Ebenso kann die Gesamtsumme der getätigten Käufe angezeigt werden. Ein zusätzlicher Anreiz wird durch die Teilnahmemöglichkeit an einem Gewinnspiel geschaffen.

Über die Schaltfläche 7 wird eine Email-Funktion aufgerufen, durch die der Benutzer gezielt mit einem Berater des Kartenemittenten Kontakt aufnehmen kann. Nach dem Anwählen der Schaltfläche 7 erscheint ein weiteres Fenster bzw. ein neuer Bildschirmausschnitt, der das persönliche Kartenpostfach des Benutzers mit den empfangenen und verschickten Emails enthält. Auf diese Weise kann er Fragen zu Produkten oder zur Verwendung stellen und das Unternehmen hat die Möglichkeit, ihn gezielt zu beraten. Die Informationen werden dabei über Emails ausgetauscht, die auch Informationen über aktuelle Sonderangebote oder Aktionen des Anbieters enthalten können. Der Benutzer kann mit dem Betreiber des Informations- und Kommunikationssystems per Email kommunizieren, der ihn auch über neue Anbieter innerhalb des Systems informieren kann. Darüber hinaus lassen sich Emails auch an externe Adressen versenden. Die hohe Werbewirkung des Systems wird vergrößert, indem an die einzelnen Emails Werbebotschaften des Systembetreibers angehängt werden, um weitere Nutzer zu gewinnen. Die Informationen der Anbieterfirmen werden dadurch im Laufe der Zeit an eine kontinuierlich steigende Zahl von Interessenten übermittelt, ohne dass einem Anbieter dadurch höhere Kosten entstehen.

Bei einer anderen Ausführungsform des Informations- und Kommunikationssystems wird nach dem Eingeben des aus Kartennummer 13 und Kartencode 14 bestehenden Zugangscodes direkt eine spezielle Informationsseite eines Anbieters aufgerufen, die auf dessen Server abgelegt ist. Der Anbieter kann z.B. Karten anlässlich einer Messe oder bei einer besonderen Veranstaltung verteilen. Benutzt ein Verbraucher anschließend diese Karte, so können ihm spezielle themenbezogene Angebote unterbreitet werden. Von dieser speziellen Informationsseite gelangt er zu den anderen Angeboten auf der Homepage des Unternehmens.

Beim Anwählen der Schaltfläche 8 in Fig. 2 wird eine Funktion aufgerufen, mit der die aktive Karte 11 mit einer weiteren Karte kombiniert werden kann. Dazu ist die Eingabe der Kartennummer und des Kartencodes der zweiten Karte erforderlich. Jedes Mal wenn der Benutzer eine neue Karte von einem Kartenemittenten erhalten hat, kann er auf diese Weise das Informationsangebot des Unternehmens mit seinen bereits vorhandenen kombinieren. Die Anzahl der kombinierbaren Karten ist nicht beschränkt, es lassen sich beliebig viele Karten kombinieren. Der Benutzer kann die von ihm bevorzugten Unternehmen gezielt zusammenstellen, um die ihn interessierenden Angebote mühelos aufzufinden. Er kann beispielsweise die Informationen des Kartenemittenten der ersten Karte 11 mit denen eines Mobilfunkanbieters und mit den Angeboten seiner bevorzugten Autovermietung kombinieren, sofern er von den jeweiligen Unternehmen entsprechende Karten erhalten hat. Durch die Eingabe eines beliebigen Zugangscodes wird der Zugang zu den Angeboten aller kombinierten Anbieter hergestellt. Die Karte ist dadurch auf das persönliche Informationsbedürfnis des Benutzers zugeschnitten, der automatisch vor belästigenden Informationen von Drittanbietern geschützt ist. Im Laufe der Zeit entsteht ein persönliches Kartenpostfach mit unbegrenzt vielen verschiedenen Inhalten.

Fig. 3 zeigt eine benutzerseitig zusammengestellte Informationsseite, die Informationen von drei verschiedenen Unternehmen enthält. Zusätzlich zu den Informationen 6 des Versandhauses, die bei der ersten Kartenbenutzung allein erschienen, sind Angebote eines Mobilfunkanbieters 9 sowie einer Autovermietung 10 abrufbar. Der Benutzer hat von allen drei Unternehmen eine Plastikkarte erhalten und die Karten miteinander kombiniert. Insgesamt besitzt er drei verschiedene Zugangscodes, mit denen er den Zugang zu der in Fig. 3 dargestellten Informationsseite herstellen kann. Wie dort zu erkennen ist, ist jede Spalte einem der Anbieter zugeordnet und enthält Hyperlinks, die zu weiteren Informationsseiten führen. Erhält der Benutzer weitere Karten, kann er die zusätzlichen Angebote mit den bereits vorhandenen kombinieren. Aus Platzgründen ist die für jeden Anbieter verfügbare Bildschirmfläche begrenzt, so dass zunächst nur der Firmenname und das dazugehörige Firmenlogo gezeigt werden. Diese Hinweise sind als Hyperlink ausgebildet und führen beim Anwählen auf spezielle Informationsseiten jedes einzelnen Anbieters mit detaillierten Informationen.

Die gewünschten Informationen lassen sich benutzerseitig frei zusammenstellen und gruppieren. Einzelne Anbieter lassen sich wieder löschen, wenn deren Angebote nicht mehr von Interesse sind. Im Vorfeld einer Kaufentscheidung kann der Benutzer mehrere Anbieter einer Kategorie zusammenstellen, um die einzelnen Angebote gezielt zu vergleichen. Es lassen sich z.B. drei Elektromärkte auf einer Seite kombinieren, um jederzeit über Preissenkungen oder Sonderangebote informiert zu sein.

Die von dem Benutzer angewählten Seiten können unter Beachtung des Datenschutzes zur Gewinnung von Benutzerprofilen statistisch ausgewertet werden. Im Allgemeinen sind die persönlichen Daten eines Benutzers nicht bekannt, denn die Karten werden unpersonalisiert, d.h. anonym, verteilt. Nur wenn dieser es wünscht, kann er seine persönlichen Daten dem Kartenemittenten übermitteln. Die Benutzerprofile können als Grundlage für Werbebotschaften dienen, die auf das Informations- und Kaufverhalten abgestimmt sind. Einem Käufer von Sportartikeln können z.B. bei seinem nächsten Besuch Angebote über Fachbücher seines Interessengebiets oder Sportreisen gemacht werden. Durch die zielgruppenorientierte Ansprache lässt sich ein sehr viel höherer Werbeerfolg erreichen.

Der Betreiber des Informations- und Kommunikationssystems kann das gesamte Informations- und Kaufverhalten eines Benutzers erfassen, beurteilen und bewerten. Auf der Grundlage des dadurch erzeugten Benutzerprofils kann der Betreiber als Vermittler für weitere Unternehmen dienen, so dass Anbieter und Benutzer gezielt zusammengeführt werden.

Umgekehrt besteht die Möglichkeit, die Zufriedenheit des Kunden mit einzelnen Anbietern hinsichtlich Preis, Qualität, Service usw. zu erfragen, um Ansatzpunkte zur Verbesserung der Angebote zu erhalten, indem das Produkt nach einem Kauf und der erfolgten Benutzung bewertet wird.

Das erfindungsgemäße Informations- und Kommunikationssystem kann auch zwischen Firmen im sogenannten "business-to-business"-Bereich verwendet werden. Produktkataloge werden im Internet für Fachkreise verfügbar gemacht, so dass hohe Druckkosten eingespart werden. Außerdem sind die Informationen immer auf dem aktuellen Stand. Verschiedenen Kunden können auch unterschiedliche Preis- und Lieferkonditionen offeriert werden und der Empfängerkreis für vertrauliche Informationen kann begrenzt werden.

Ein zweites Ausführungsbeispiel wird anhand Fig. 5 erläutert. Fig. 5 ist eine schematische Darstellung der Kommunikation zwischen dem Benutzer und dem Betreiber des Informations- und Kommunikationssystems. Von einem Emittenten werden Codes durch verschiedene Werbeträger ausgegeben. Sie können auf Plakaten dargestellt sein, ebenso können sie in einer Werbeanzeige in einer Zeitschrift oder Zeitung abgebildet sein. Darüber hinaus können die Codes auch in elektronischer Form, beispielsweise als SMS-Nachricht oder als Email verbreitet werden. Die Codes werden breit gestreut, d.h. derselbe Code wird von einer großen Benutzerzahl verwendet. Ein bestimmter Code kann beispielsweise von einer Filiale eines Unternehmens ausgegeben werden, so dass die Resonanz auf die Werbung gezielt erfasst werden kann.

Sieht ein Benutzer einen Code beispielsweise in einem Schaufenster, so kann er diesen Code direkt über sein Mobiltelefon an den Betreiber des Informations- und Kommunikationssystems übermitteln. Der Code ist vorzugsweise als Zahlenfolge ausgebildet, alternativ kann auch eine alphanumerische Zeichenkette als Code gewählt werden. Um diesen Code an den Betreiber des Informations- und Kommunikationssystems zu übermitteln, wird von dem Benutzer eine Kommunikationsverbindung mit einem zentralen Server aufgebaut. Dazu wählt er an seinem Mobiltelefon 16 eine bestimmte Zugangsnummer des Systembetreibers, um die Datenübermittlung zu ermöglichen. Bei der Mobilfunkverbindung wird die Rufnummer des Handys 16 automatisch an den Rechner 17 übertragen. Von dem Handy 16 erfolgt die Datenübertragung drahtlos zu Basisstation 18, von wo aus sie über das Telefonnetz an den als zentralen Server dienenden Rechner 17 weitergeleitet wird. Der Benutzer wird zur Eingabe des Codes aufgefordert und kann den neuen Code über die Tasten des Mobiltelefons 16 eingeben. Es kann auch vorgesehen sein, dass der Benutzer den Code als Sprachmitteilung übermittelt und der Rechner 17 über ein entsprechendes Spracheingabesystem verfügt, das diese Sprachmitteilungen in Daten umwandelt. Anschließend erhält der Benutzer eine Rückmeldung von dem Rechner 17, durch die die Eingabe des Codes bestätigt wird. Für jeden eingegebenen Code erhält der Benutzer Punkte auf einem persönlichen Punktekonto; die in Abhängigkeit von Aktionen des Benutzers vergeben werden, beispielsweise für jede Kontaktaufnahme per Email, für die Weiterempfehlung des Systems oder für das Anwählen von Hyperlinks. Die Punkte entsprechen einem bestimmten Geldbetrag und können ab einem bestimmten Punktestand ausgezahlt werden. Als Alternative zu einer Geldprämie kann der Benutzer auch zwischen verschiedenen Sachprämien auswählen. Eine Prämie kann auch zum Aufladen einer Guthabenkarte für ein Mobiltelefon oder zum kostenlosen Surfen im Internet benutzt werden.

Um auf die Informationen zugreifen zu können, muss der Benutzer eine Kommunikationsverbindung mit dem Systembetreiber über das Internet herstellen. Dieses kann vorzugsweise über einen mit dem Internet verbindbaren Personal Computer erfolgen, ebenso eignen sich mobile Kommunikationsgeräte für diesen Zweck. Wie in Fig. 5 schematisch dargestellt ist, erfolgt die Kommunikation zwischen dem Benutzer und dem Rechner 17 über einen an das Internet angeschlossenen PC 19, der in bekannter Weise mit dem Internet 20 verbunden ist. Nach der Herstellung der Kommunikationsverbindung kann der Benutzer direkt mit dem Rechner 17 des Systembetreibers kommunizieren.

Der Benutzer wählt in einem Browserprogramm an dem PC 19 die Internetadresse des Informations- und Kommunikationssystems und wird zur Eingabe der Handynummer und seines Benutzerkennworts aufgefordert. Die Handynummer dient zur Identifikation eines bestimmten Benutzers, da es sich dabei um eine nur einmal vergebene Nummer handelt. Das Passwort erhält ein Benutzer bei der erstmaligen Benutzung des Systems, das an ihn als Email oder als SMS-Nachricht übermittelt werden kann.

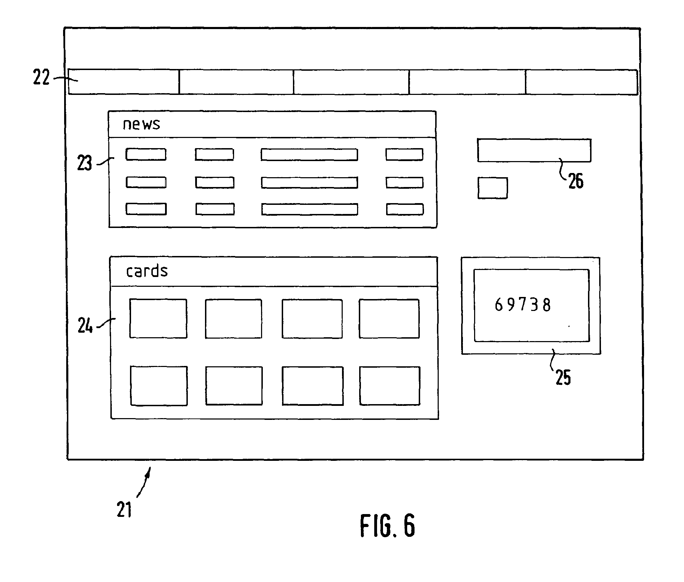

Fig. 6 zeigt die persönliche Informationsseite 21 des Benutzers, die nach dem Einloggen auf dem Bildschirm erscheint. In dem oberen Bereich der Informationsseite befindet sich eine Menüleiste 22 mit Schaltflächen, durch deren Auswahl weitere Menübildschirme aufgerufen werden können. Der Benutzer trägt den neuen Code in das Eingabefeld 26 ein und übermittelt ihn online an den Systembetreiber. Wie der Bildschirmdarstellung zu entnehmen ist, hat der Benutzer bereits eine gewisse Anzahl von Codes eingegeben, wobei jedem Code einer der in Feld 24 von Fig. 6 als Umriss gezeigten Hyperlinks zugeordnet ist. Jeder Hyperlink enthält ein Logo des jeweiligen Anbieters, so dass die Informationen einer bestimmten Firma leicht aufgefunden werden können. Nach der Neueingabe eines Codes wird der zugehörige Hyperlink in Feld 24 dargestellt und kann angeklickt werden. Wenn zu einem späteren Zeitpunkt keine Informationen eines bestimmten Anbieters mehr gewünscht werden, kann der entsprechende Hyperlink durch den Benutzer wieder gelöscht werden. Der Benutzer kann auf einer separaten Menüseite diejenigen Firmen auswählen, von denen er zukünftig Informationen erhalten will und die seinen persönlichen Interessen entsprechen. Dazu ist es nicht erforderlich, dass er einen von dem Unternehmen ausgegebenen Code kennt. Zudem kann er auswählen, ob ihm Informationen auch per Email, als SMS oder per Post zugestellt werden sollen. Sollte er an einem der Angebote nicht mehr interessiert sein, so kann er die betreffende Firma jederzeit wieder von seiner persönlichen Liste streichen. Er erhält also nur solche Informationen, die er selbst angefordert hat. Bei Fragen zu einzelnen Produkten oder zum Gebrauch eines bereits gekauften Produkts kann er sich über eine Email-Funktion mit dem entsprechenden Anbieter in Verbindung setzen.

In dem oberen Feld 23 der Informationsseite 21 von Fig. 6 sind weitere Hyperlinks dargestellt, die von dem Benutzer abrufbar sind. Jede Zeile betrifft einen Hyperlink, von dem ein schlagwortartiger Titel, das Erscheinungsdatum und weitere Informationen sichtbar sind, z. B. ob die damit verknüpften Informationen bereits abgerufen wurden oder nicht. Zusätzlich ist die Punktzahl angegeben, die der Benutzer durch die Anwahl des Hyperlinks erhält. Der jeweils aktuelle Gesamtpunktestand des Benutzers wird in dem Feld 25 der Informationsseite 21 angezeigt und nach der Durchführung von benutzerseitigen Aktionen, für die Punkte vergeben werden, unmittelbar aktualisiert.

Der Benutzer kann wählen, ob er einen neuen Code über sein Mobiltelefon oder über einen PC an den Systembetreiber übermittelt. Grundsätzlich stehen ihm beide Möglichkeiten offen, wobei die Eingabe per Mobiltelefon den Vorteil aufweist, dass der Benutzer einen Code, den er beispielsweise auf einer Plakatwand oder in einem Schaufenster sieht, sofort eingeben und übertragen kann, ohne dass er sich irgendeine Nummer merken oder sich Notizen machen muss. Entscheidet er sich für die Eingabe an einem Personal Computer, so kann er direkt auf die mit dem Code verknüpften Informationen zugreifen.

Das Informations- und Kommunikationssystem ist für den Benutzer kostenlos. Der Systembetreiber erhebt in Abhängigkeit von der Art und Menge der abgefragten Informationen Gebühren von den anbietenden Firmen.

## Patentansprüche

1. Internetbasiertes Informations- und Kommunikationssystem mit mindestens einem als zentraler Server dienenden Rechner, **dadurch gekennzeichnet, dass** es von wenigstens einem Emittenten an bestimmte Benutzer ausgebbare Informationsträger umfasst, wobei jeder Informationsträger einen trägerspezifischen Zugangscode aufweist, durch dessen Eingabe an einem externen Rechner auf einer von dem zentralen Server bereitgestellten zentralen Zugangsseite durch den Benutzer eine dem Zugangscode zugeordnete codespezifische, benutzerseitig zusammenstellbare Informationsseite aufrufbar ist, die durch die Eingabe eines anderen Zugangscodes um diesem zugeordnete Hyperlinks erweiterbar ist.

2. Informations- und Kommunikationssystem nach Anspruch 1, **dadurch gekennzeichnet, dass** der Informationsträger als Karte (11), insbesondere als Plastikkarte, vorzugsweise im Scheckkartenformat, ausgebildet ist, auf der die Internetadresse (12) der zentralen Zugangsseite (2) und der Zugangscode aufgedruckt sind.

3. Informations- und Kommunikationssystem nach Anspruch 1 oder 2, **dadurch gekennzeichnet, dass** ein Zugangscode eine Kartennummer (13) und einen Kartencode (14) umfasst.

4. Informations- und Kommunikationssystem nach einem der vorangehenden Ansprüche, **dadurch gekennzeichnet, dass** der Server ein Mittel zum Vergleichen des eingegebenen Zugangscodes mit einem in einer Datenbank des Servers gespeicherten Zugangscode aufweist und bei Identität den Zugang ermöglicht.

5. Informations- und Kommunikationssystem nach Anspruch 3 oder 4, **dadurch gekennzeichnet, dass** der Kartencode (14) aus einer Zahlen- und/oder Buchstabenkombination besteht.

6. Informations- und Kommunikationssystem nach einem der Ansprüche 3 bis 5, **dadurch gekennzeichnet, dass** die Kartennummer (13) wenigstens sechsstellig, vorzugsweise achtstellig, und der Kartencode (14) wenigstens vierstellig, vorzugsweise fünfstellig ist.

7. Informations- und Kommunikationssystem nach einem der Ansprüche 2 bis 6, **dadurch gekennzeichnet, dass** die Plastikkarte (11) gegebenenfalls zusätzlich einen Speicher, vorzugsweise einen Magnetstreifen oder einen Chip (15), aufweist, in dem Kartennummer (13) und/oder Kartencode (14) und/oder benutzerspezifische Daten gespeichert sind.

8. Informations- und Kommunikationssystem nach einem der Ansprüche 2 bis 7, **dadurch gekennzeichnet, dass** beim Einsetzen der Karte (11) in einen Kartenleser einer mit dem Internet verbundenen Kommunikationseinrichtung der Zugangscode übermittelt und die dem Zugangscode zugeordnete Informationsseite und/oder die benutzerspezifische Übersichtsseite (5) aufrufbar ist.

9. Internetbasiertes Informations- und Kommunikationssystem mit mindestens einem als zentraler Server dienenden Rechner, **dadurch gekennzeichnet, dass** es von wenigstens einem Emittenten ausgebbare Codes umfasst, die von einem Benutzer über eine Kommunikationsverbindung an den zentralen Server (17) übermittelbar sind, wobei nach der Übermittlung eine codespezifische, benutzerseitig zusammenstellbare Informationsseite (21) im Internet (20) abrufbar ist, die über einen Hyperlink mit dem Code zugeordneten Informationen verknüpft ist und durch die Eingabe eines anderen Codes um einen diesem zugeordneten Hyperlink erweiterbar ist.

10. Informations- und Kommunikationssystem nach Anspruch 9, **dadurch gekennzeichnet, dass** die Kommunikationsverbindung als Mobilfunkverbindung und/oder als Internetverbindung ausgebildet ist.

11. Informations- und Kommunikationssystem nach Anspruch 9 oder 10, **dadurch gekennzeichnet, dass** die Kommunikationsverbindung zur automatischen Übertragung einer den Benutzer identifizierenden Kennung an den Rechner (17) ausgebildet ist.

12. Informations- und Kommunikationssystem nach Anspruch 9 oder 10, **dadurch gekennzeichnet, dass** eine den Benutzer identifizierende Kennung benutzerseitig eingebbar und an den Rechner (17) übertragbar ist.

13. Informations- und Kommunikationssystem nach Anspruch 11 oder 12, **dadurch gekennzeichnet, dass** die Kennung als Rufnummer ausgebildet ist.

14. Informations- und Kommunikationssystem nach einem der Ansprüche 11 bis 13, **dadurch gekennzeichnet, dass** die Kennung ein Zugangskennwort umfasst.

15. Informations- und Kommunikationssystem nach Anspruch 14, **dadurch gekennzeichnet, dass** das Zugangskennwort dem Benutzer nach der ersten Codeeingabe übermittelt wird.

16. Informations- und Kommunikationssystem nach einem der Ansprüche 9 bis 15, **dadurch gekennzeichnet, dass** die Kommunikationsverbindung über ein Mobiltelefon (16) herstellbar ist.

17. Informations- und Kommunikationssystem nach Anspruch 16, **dadurch gekennzeichnet, dass** der Code manuell und/oder akustisch und/oder mittels eines Strichcodelesers von dem Benutzer in das Mobiltelefon (16) eingebbar ist.

18. Informations- und Kommunikationssystem nach einem der Ansprüche 9 bis 17, **dadurch gekennzeichnet, dass** es zur Übermittlung einer Bestätigung an den Benutzer nach der Eingabe eines Codes ausgebildet ist.

19. Informations- und Kommunikationssystem nach Anspruch 18, **dadurch gekennzeichnet, dass** die Bestätigung als Sprachmitteilung und/oder als SMS-Mitteilung ausgebildet ist.

20. Informations- und Kommunikationssystem nach einem der Ansprüche 9 bis 19, **dadurch gekennzeichnet, dass** ein Code Bestandteil eines Werbeträgers ist.

21. Informations- und Kommunikationssystem nach Anspruch 20, **dadurch gekennzeichnet, dass** der Werbeträger als Plastikkarte oder Werbeanzeige oder Plakat oder Aufkleber oder Warenaufdruck ausgebildet ist.

22. Informations- und Kommunikationssystem nach Anspruch 20, **dadurch gekennzeichnet, dass** der Werbeträger als Internetbanner oder Fernseh- oder Radiospot oder als Email ausgebildet ist.

23. Informations- und Kommunikationssystem nach einem der vorangehenden Ansprüche, **dadurch gekennzeichnet, dass** die codespezifische Informationsseite (21) Mitteilungen (23) eines Emittenten an den Benutzer enthält.

24. Informations- und Kommunikationssystem nach einem der vorangehenden Ansprüche, **dadurch gekennzeichnet, dass** die codespezifische Informationsseite (21) Hyperlinks (24) aufweist, die mit Internetseiten des Emittenten verknüpft sind.

25. Informations- und Kommunikationssystem nach einem der vorangehenden Ansprüche, **dadurch gekennzeichnet, dass** es ein Mittel zum Senden und Empfangen elektronischer Mitteilungen über die Informationsseite (21) aufweist.

26. Informations- und Kommunikationssystem nach Anspruch 25, **dadurch gekennzeichnet, dass** eine elektronische Mitteilung Hyperlinks enthält, durch deren Anwahl kontextspezifische Informations- und/oder Hilfeseiten aufrufbar sind.

27. Informations- und Kommunikationssystem nach einem der vorangehenden Ansprüche, **dadurch gekennzeichnet, dass** die Inhalte der dem Zugangscode zugeordneten Informationsseite (21) benutzerseitig gruppierbar, erweiterbar und wieder löschbar sind.

28. Informations- und Kommunikationssystem nach einem der vorangehenden Ansprüche, **dadurch gekennzeichnet, dass** einem Benutzer ein Punktekonto (25) zugeordnet ist und Punkte in Abhängigkeit von Aktionen des Benutzers vergebbar sind.

29. Informations- und Kommunikationssystem nach Anspruch 28, **dadurch gekennzeichnet, dass** das Punkteguthaben als Geldbetrag und/oder als Sachprämie und/oder als Freiminuten zum Telefonieren auszahlbar ist.

30. Informations- und Kommunikationssystem nach einem der vorangehenden Ansprüche, **dadurch gekennzeichnet, dass** Mitteilungen eines Emittenten an den Benutzer als Email und/oder als SMS-Mitteilung und/oder per Post übermittelbar sind.

31. Informations- und Kommunikationssystem nach einem der vorangehenden Ansprüche, **dadurch gekennzeichnet, dass** die Kommunikationsverbindung zwischen dem Benutzer und dem Rechner zur Nutzung der WAP-, und/oder GPRS- und/oder UMTS-Technologie ausgebildet ist.

32. Informations- und Kommunikationssystem nach einem der vorangehenden Ansprüche, **dadurch gekennzeichnet, dass** es ein Bestell- und/oder Abrechnungs- und/oder Liefersystem umfasst.

33. Informations- und Kommunikationssystem nach Anspruch 32, **dadurch gekennzeichnet, dass** die Abrechnung über ein Mobilfunk-Abrechnungssystem erfolgt.
